# EUROPÄISCHE PATENTSCHRIFT

(11) **EP 1 958 836 B1**
(45) Veröffentlichungstag und Bekanntmachung des Hinweises auf die Patenterteilung: **03.02.2016**
(21) Anmeldenummer: 08002420.1
(22) Anmeldetag: 09.02.2008
(51) Int. Cl.: B60W 20/00, B60K 6/48, B60W 10/02, B60W 10/06, B60W 10/08, B60W 10/26

(54) **Parallel-Hybridantrieb in einem Kraftfahrzeug und Verfahren zur Ansteuerung eines Parallel-Hybridantriebes**
Parallel hybrid drive train in a motor vehicle and method for controlling a parallel hybrid drive train
Propulsion hybride parallèle dans un véhicule automobile et procédé de commande d'une propulsion hybride parallèle

(30) Priorität: 17.02.2007 DE 102007007925
(43) Veröffentlichungstag der Anmeldung: 20.08.2008
(73) Patentinhaber: Volkswagen Aktiengesellschaft, 38440 Wolfsburg (DE)
(72) Erfinder: Zillmer, Michael, 38178 Sickte (DE); Pott, Ekkehard, 38518 Gifhorn (DE); Philipp, Kai, Dr., 38179 Lagesbüttel (DE)

(56) Entgegenhaltungen:
- DE-A1- 10 158 536
- DE-A1-102004 040 315
- US-A1- 2004 009 842
- US-B1- 6 223 842

## Beschreibung

Die Erfindung betrifft einen Parallel-Hybridantrieb in einem Kraftfahrzeug sowie ein Verfahren zur Ansteuerung eines Parallel-Hybridantriebes.

Bei Hybridfahrzeugen werden zwei Antriebseinheiten miteinander kombiniert, die auf unterschiedliche Weise die Leistung für den Fahrzeugantrieb bereitstellen. Besonders gut ergänzen sich die Eigenschaften eines Verbrennungsmotors und mindestens einer Elektro-Maschine, weshalb Hybridfahrzeuge heute überwiegend mit einer solchen Kombination ausgestattet werden. Die Anbindung der Elektro-Maschine an die Motorkurbelwelle kann dabei auf verschiedene Arten erfolgen. So kann diese über eine Kupplung bzw. direkt mit der Kurbelwelle des Motors verbunden oder über einen Riemenantrieb bzw. ein Getriebe angekoppelt sein.

In diesem Zusammenhang ist aus der DE 101 58 536 A1 ein Kraftfahrzeugantrieb mit einem Elektromotor und mindestens einer Kupplung im Antriebsstrang zwischen der elektrischen Maschine und den Antriebsrädern eines Kraftfahrzeuges bekannt. Wenn der Sonderfall eintritt, dass bei sehr geringen Fahrzeuggeschwindigkeiten oder bei Fahrzeugstillstand hohe Momente von der elektrischen Maschine aufgebracht werden müssen als Elektromotor, dann wird die mindestens eine Kupplung drehmomentübertragend schlupfend betrieben, sodass weder die elektrische Maschine noch die Kupplung thermisch überlastet werden.

Die US 6,223,842 B1 betrifft ein Serien-Parallel-Hybridfahrzeug. Eine Überprüfung wird durchgeführt, um zu erfassen, ob es ein Problem einer Kupplung wie z.B. ein Durchrutschen oder ein Überhitzen in einem eingekuppelten Zustand der Kupplung gibt. Bei einem Erfassen eines Kupplungsproblems wird das Fahrzeug in einer Serienhybridbetriebsart betrieben, um zu verhindern, dass Fahrcharakteristiken durch das Kupplungsproblem verschlechtert werden.

Die US 2004/0009842 A1 betrifft ein Drehmomentsteuerungsverfahren und eine Vorrichtung für ein Hybridfahrzeug. Ein Fahrzeugantriebsdrehmoment, welches zu den angetriebenen Rädern übertragen wird, wird bei einem vorbestimmten Drehmomentverteilungszustand gesteuert. Ein Verbrennungsmotormoment wird in sowohl ein Kupplungsübertragungsmoment, welches zu den angetriebenen Rädern über die Kupplung übertragen wird, und ein Erzeugungsmoment, welches zu einem Generator übertragen wird, aufgeteilt. Sowohl eine Kupplungsrate der Kupplung als auch das Erzeugungsmoment des Generators werden auf der Grundlage zumindest einer Fahrzeuggeschwindigkeit gesteuert. Wenn sich eine Temperatur der Kupplung erhöht, kann das Verteilungsverhältnis des Kupplungsübertragungsmoments verringert werden.

Die DE 10 2004 040 315 A1 betrifft ein Verfahren zum Betreiben eines Hybridkraftfahrzeugs, welches eine Brennkraftmaschine, mindestens eine elektrische Maschine und ein Automatikgetriebe aufweist. In bestimmten Betriebszuständen wird ein Antriebsmoment des Hybridkraftfahrzeugs wenigstens teilweise durch ein Moment von der elektrischen Maschine aufgebracht. Hierbei wird wenigstens ein Betriebsparameter von wenigstens einer elektrischen Komponente des Hybridkraftfahrzeugs mit wenigstens einem vorbestimmten Schwellwert verglichen. Wenn der wenigstens eine vorbestimmte Betriebsparameter den wenigstens einen vorbestimmten Schwellwert erreicht, wird die Aufteilung des Antriebsdrehmoments auf ein Drehmoment der elektrischen Maschine und ein Drehmoment der Brennkraftmaschine derart geändert, dass ein Wert des wenigstens einen bestimmten Betriebsparameters einen kritischen Wert für diesen Betriebsparameter nicht über- oder unterschreitet.

Als elektrische Energiespeicher werden bei Hybridfahrzeugen häufig zyklenfeste Batterien in NiMH- oder Li-lonen-Technik eingesetzt. Die Lebensdauer der Batterie ist u.a. über die durchgesetzte (d.h. ein- und ausgespeicherte) Energie sowie die Leistung bzw. den Energiehub während des Lade- bzw. Entladevorgangs begrenzt. Eine starke Zyklisierung führt somit zu einer verringerten Lebensdauer. Alternativ können auch Kondensatoren als Energiespeicher verwendet werden.

Die erzielbare Verbrauchsabsenkung bei Hybridfahrzeugen resultiert entscheidend aus einer geeigneten Steuerungsstrategie. Die Grundfunktionen dabei sind die Energierückgewinnung aus Verzögerungsphasen (Rekuperation), der Start-Stopp-Betrieb sowie der rein elektromotorische Antrieb in Bereichen mit nur geringen verbrennungsmotorischen Wirkungsgraden.

Darüber hinaus wird die Elektro-Maschine im Antriebsstrang häufig auch zur Verbesserung der Fahrleistungen des Hybridfahrzeugs eingesetzt. So kann die Momentenabgabe von Verbrennungsmotor und Elektro-Maschine auch parallel erfolgen, um das maximale Drehmoment der gesamten Antriebseinheit zu steigern (Boostbetrieb). Hierbei ist es zur Darstellung eines reproduzierbaren Fahrverhaltens wichtig, die Boostfunktion bei vergleichbaren Randbedingungen möglichst immer mit gleicher Performance darzustellen.

Der Erfindung liegt daher das technische Problem zugrunde, einen Parallel-Hybridantrieb sowie ein Verfahren zur Ansteuerung eines Parallel-Hybridantriebs zu schaffen, mittels derer eine reproduzierbarere Performance im Langzeitbetrieb erreichbar ist.

Die Lösung des technischen Problems ergibt sich durch die Gegenstände mit den Merkmalen der Patentansprüche 1 und 12. Weitere vorteilhafte Ausgestaltungen der Erfindung ergeben sich aus den Unteransprüchen.

Hierzu umfasst der Parallel-Hybridantrieb eine Elektro-Maschine, einen Verbrennungsmotor, einen elektrischen Energiespeicher und mindestens ein Steuergerät zur Ansteuerung des Parallel-Hybridantriebs, wobei in dem mindestens einen Steuergerät eine Soll-Alterungskurve für mindestens eine Komponente abgelegt ist, eine Ist-Alterung der Komponente erfasst wird, wobei bei einer Überschreitung der Soll-Alterungskurve durch die Ist-Alterung die Betriebsstrategie derart angepasst wird, dass die Ist-Alterung sich der Soll-Alterungskurve nähert, wobei vorzugsweise die Ist-Alterung auf oder unter die Soll-Alterungskurve gedrückt wird. Die Erfindung geht dabei von der Erkenntnis aus, dass einzelne Komponenten eines Hybridantriebs je nach Fahrzeugsituationen und Fahrverhalten einem unterschiedlich starken Verschleiß unterworfen sind. Um nun eine gleichmäßigere Lebensdauer des Parallel-Hybridantriebs zu gewährleisten, wird eine Ist-Alterung mit einer Soll-Alterung verglichen und gegebenenfalls die Betriebsstrategie des Hybridantriebs in Richtung Lebensdauerverlängerung angepasst.

In einer bevorzugten Ausführungsform ist die Elektro-Maschine über eine Kupplung mit der Motorwelle des Verbrennungsmotors verbunden.

In einer weiteren bevorzugten Ausführungsform ist die mindestens eine Komponente, deren Soll-Alterungskurve in dem mindestens einen Steuergerät abgelegt ist, der elektrische Energiespeicher und/oder die Elektro-Maschine und/oder die Kupplung zwischen Elektro-Maschine und Verbrennungsmotor. Dabei ist z.B. die Kupplung aufgrund häufiger Start-Stopp-Vorgänge starken Belastungen ausgesetzt.

In einer bevorzugten Ausführungsform wird die absolute Anzahl der Kupplungsbetätigungen und/oder die Laufleistung und/oder die Energie, mit der im Mittel während eines Startvorganges die Kupplung beaufschlagt wird, erfasst, wobei bei Überschreiten mindestens eines Schwellenwertes die Betriebsstrategie derart geändert wird, dass die Anzahl der Kupplungsbetätigungen reduziert wird.

Weiter vorzugsweise ist der Schwellwert eine Anzahl von Kupplungsbetätigungen und/oder ein laufleistungsspezifischer Wert (z.B. ein Wert zwischen 1-8, vorzugsweise 3-5, insbesondere 4 Kupplungsbetätigungen/km) und/oder ein laufleistungsspezifischer Wert oberhalb einer Laufleistung (z.B. ein Wert zwischen 1-8, vorzugsweise 3-5, insbesondere 4 Kupplungsbetätigungen/km bei einer Laufleistung größer 20-80.000 km, vorzugsweise 40.000-60.000 km, insbesondere 50.000 km).

Die Anzahl der Kupplungsbetätigungen kann durch die Betriebsstrategie beispielsweise dadurch reduziert werden, dass die Anzahl der rein elektrischen Fahrten und/oder Start-Stopp-Vorgänge reduziert wird. Im Maximalfall wird nur noch der Erststart pro Driving Cycle über die Kupplung abgewickelt. Bei diesem Impulsstart wird erst die Elektro-Maschine hochgefahren und dann die Kupplung geschlossen, um so den Verbrennungsmotor anzuwerfen. Im Extremfall kann dann auch noch auf den Impulsstart verzichtet werden und nur noch ein Schleppstart durchgeführt werden (Kupplung bleibt geschlossen und Elektro-Maschine läuft bei geschlossener Kupplung hoch).

In einer weiteren bevorzugten Ausführungsform wird als Betriebsstrategie eine Kupplungs-Erholzeit definiert, innerhalb derer eine Kupplungsbetätigung unterbleibt. Weiter vorzugsweise ist die Kupplungs-Erholzeit von der Geschwindigkeit des Kraftfahrzeugs abhängig, da somit schneller die Anzahl der Kupplungsbetätigungen/km reduziert wird, was ein bevorzugter Schwellwert ist. Dabei gilt, dass bei hohen Geschwindigkeiten die Kupplungs-Erholzeit kürzer gewählt wird als bei niedrigeren Geschwindigkeiten.

In einer weiteren bevorzugten Ausführungsform wird die Kupplungs-Erholzeit mit steigender Absolutzahl der Kupplungsbetätigungen und/oder steigender Laufleistung erhöht, um die Lebensdauer weiter zu verlängern.

In einer weiteren bevorzugten Ausführungsform wird die Anzahl der Kupplungsbetätigungen und/oder die Einkupplungszeit durch eine Überwachung der Drehzahlen des Verbrennungsmotors und der Elektro-Maschine erfasst. Dabei gilt, dass bei gleicher Drehzahl die Kupplung geschlossen ist und bei ungleicher Drehzahl offen oder zumindest teilweise offen ist.

In einer weiteren bevorzugten Ausführungsform werden in Abhängigkeit von der Laufleistung und/oder der durchgesetzten Energie die maximalen Momente und Leistungen beim Boosten und/oder Rekuperieren der Elektro-Maschine zurückgenommen: Durch diese Reduzierung der Momente und Leistungen wird die Lebensdauer der Elektro-Maschine, des Energiespeichers oder auch der Leistungselektronik (Umrichter) verlängert.

In einer weiteren bevorzugten Ausführungsform wird der SOH (State of Health) des Energiespeichers ermittelt, wobei bei Unterschreitung vorgebbarer Schwellwerte der maximale Lade- und Entladestrom begrenzt wird, wobei weiter vorzugsweise der maximale Lade- und Entladestrom von SOC (State of Charge) sowie der Batterie- und/oder Umgebungstemperatur abhängig ist.

Die Erfindung wird nachfolgend anhand eines bevorzugten Ausführungsbeispieles näher erläutert. Die Fig. zeigen:

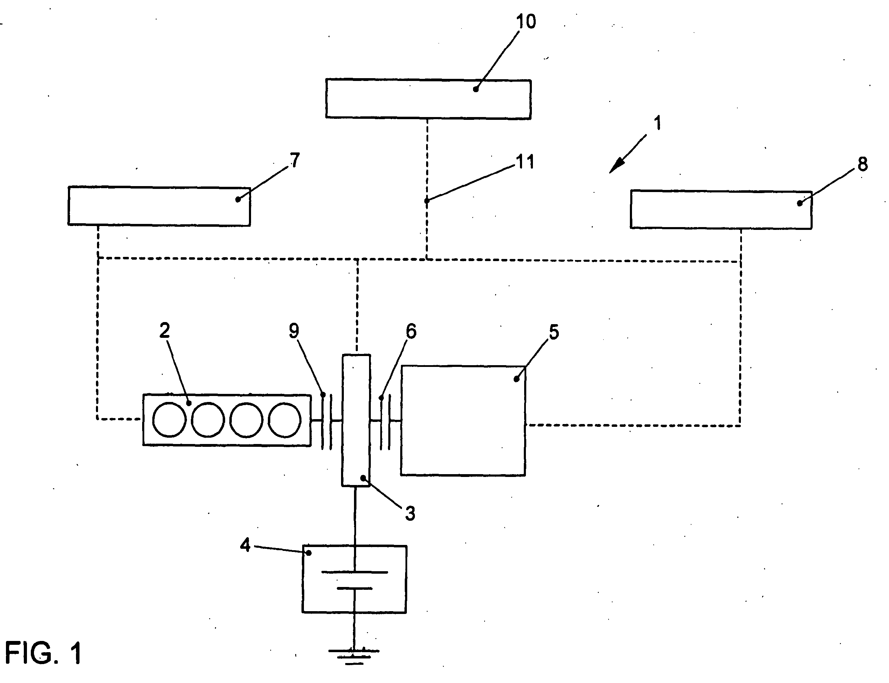

- Fig. 1: ein schematisches Blockschaltbild eines Parallel-Hybridantriebes mit einer Kupplung zwischen Elektro-Maschine und Verbrennungsmotor,
- Fig. 2: eine Soll-und eine Ist-Alterungskurve für die Kupplung und
- Fig. 3: eine Darstellung der Kupplungserholzeit über die Anzahl der Kupplungsbetätigungen (Starts).

Der Hybridantrieb 1 umfasst einen Verbrennungsmotor 2, eine Elektro-Maschine 3, einen Energiespeicher 4, der vorzugsweise als Batterie ausgebildet ist, ein Getriebe 5, ein Anfahrelement 6 (beispielsweise Doppelkupplung oder Wandler), ein Motorsteuergerät 7 und ein Getriebesteuergerät 8. Die Anbindung der Elektro-Maschine an die Motorkurbelwelle erfolgt über eine Kupplung 9. Die Steuerung des Verbrennungsmotors 2 erfolgt über das Motorsteuergerät 7 und des Getriebes 5 über das Getriebesteuergerät 8. Des Weiteren ist der Elektro-Maschine 3 ein nicht dargestelltes Steuergerät sowie ein Umrichter zugeordnet. Gegebenenfalls kann darüber hinaus ein separates Hybrid-Steuergerät 10 vorgesehen sein. Die Steuergeräte 7, 8 und 10 sowie das nicht dargestellte Steuergerät der Elektro-Maschine sind über ein Bussystem 11, beispielsweise einen CAN- oder FlexRay-Bus, miteinander verbunden. In einem der Steuergeräte 7, 8 oder 10 ist eine Soll-Alterungskurve für mindestens eine Komponente abgelegt, vorzugsweise für die Kupplung 9.

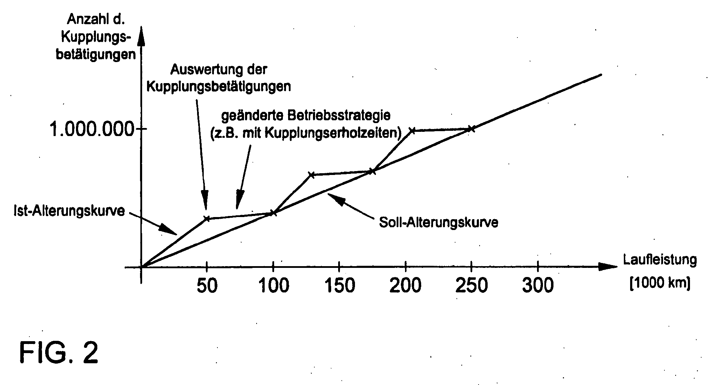

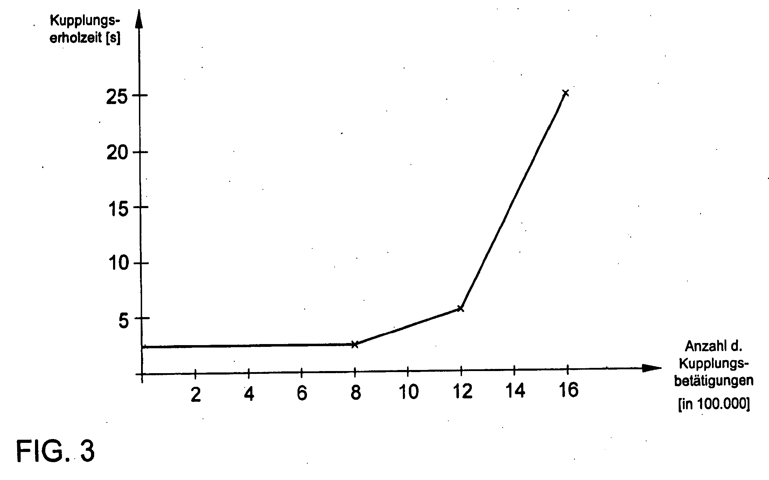

Eine beispielhafte Soll-Alterungskurve für die Kupplung 9 in Form einer Geraden ist in Fig. 2 dargestellt. Dabei ist die absolute Anzahl der Kupplungsbetätigungen über der Laufleistung in 1.000 km dargestellt. Bei einer angenommenen Soll-Laufleistung von 250.000 km kann die Kupplung 1.000.000 mal betätigt werden, ohne dass ein unzulässig hoher Verschleiß auftritt, was einer mittleren Betätigungshäufigkeit von 4/km entspricht. Da die Kupplung 9 ein Verschleißteil ist, nimmt mit zunehmender Betätigungshäufigkeit deren Ausfallwahrscheinlichkeit zu. Während des Betriebes, vorzugsweise erst ab einer gewissen Laufleistung von beispielsweise 50.000 km, wird die Anzahl der absoluten Kupplungsbetätigungen ausgewertet, die kontinuierlich erfasst wurden. Liegt das Ergebnis, beispielsweise die Anzahl der Kupplungsbetätigungen, unter der Soll-Alterungskurve, so bleibt es bei der bisherigen Betriebsstrategie, die beispielsweise auf Verbrauchsoptimierung ausgelegt ist. Liegt das Ergebnis, beispielsweise die Anzahl der Kupplungsbetätigungen, hingegen über der Soll-Alterungskurve, so wird die Betriebsstrategie in geeigneter Weise angepasst (z.B. die Momenten-und/oder Drehzahlgrenzen für rein elektrisches Fahren eingeschränkt) und/oder eine Kupplungs-Erholzeit aktiviert (siehe Fig. 3), d.h. für eine bestimmte Zeit wird die Kupplung 9 nicht betätigt, wobei die Länge der Kupplungs-Erholzeit abhängig von der Absolutzahl der Kupplungsbetätigungen ist. Ist dann anschließend die Anzahl der Kupplungsbetätigungen über der Laufleistung auf bzw. unter der Soll-Alterungskurve, wird die verbrauchsoptimierte Betriebsstrategie wieder durchgeführt. Ansonsten wird erneut eine Kupplungs-Erholzeit aktiviert bzw. die angepasste Betriebsstrategie beibehalten, bis die Soll-Alterungskurve unterschritten wird.

## Patentansprüche

1. Parallel-Hybridantrieb, umfassend mindestens eine Elektro-Maschine, einen Verbrennungsmotor, mindestens einen elektrischen Energiespeicher und mindestens ein Steuergerät zur Ansteuerung des Parallel-Hybridantriebes,
**dadurch gekennzeichnet, dass**
in dem mindestens einen Steuergerät (7, 8, 10) eine Soll-Alterungskurve für mindestens eine Komponente abgelegt ist, eine Ist-Alterung der Komponente erfasst wird, wobei bei einer Überschreitung der Soll-Alterungskurve durch die Ist-Alterung die Betriebsstrategie derart angepasst wird, dass die Ist-Alterung sich der Soll-Alterungskurve annähert.

2. Parallel-Hybridantrieb nach Anspruch 1, **dadurch gekennzeichnet, dass** die Elektro-Maschine (3) über eine Kupplung (9) mit der Motorwelle des Verbrennungsmotors (2) verbunden ist.

3. Parallel-Hybridantrieb nach Anspruch 1 oder 2, **dadurch gekennzeichnet, dass** die mindestens eine Komponente, deren Soll-Alterungskurve in dem mindestens einen Steuergerät (7, 8, 10) abgelegt ist, der elektrische Energiespeicher (4) und/oder die Leistungselektronik und/oder die Elektro-Maschine (3) und/oder die Kupplung (9) zwischen Elektro-Maschine (3) und Verbrennungsmotor (2) ist.

4. Parallel-Hybridantrieb nach Anspruch 3, **dadurch gekennzeichnet, dass** die Anzahl der Kupplungsbetätigungen und/oder die Laufleistung und/oder die mittlere in die Kupplung eingetragene Energie bei einer Betätigung erfasst wird, wobei bei Überschreiten mindestens eines Schwellwertes die Betriebsstrategie derart geändert wird, dass die Anzahl der Kupplungsbetätigungen reduziert wird.

5. Parallel-Hybridantrieb nach Anspruch 4, **dadurch gekennzeichnet, dass** der Schwellwert eine Anzahl von Kupplungsbetätigungen und/oder ein laufleistungsspezifischer Wert und/oder ein laufleistungsspezifischer Wert oberhalb einer Laufleistung ist.

6. Parallel-Hybridantrieb nach einem der Ansprüche 3 bis 5, **dadurch gekennzeichnet, dass** als Betriebsstrategie eine Kupplungs-Erholzeit definiert wird, innerhalb derer eine Kupplungsbetätigung unterbleibt.

7. Parallel-Hybridantrieb nach Anspruch 6, **dadurch gekennzeichnet, dass** die Kupplungs-Erholzeit von der Geschwindigkeit des Kraftfahrzeuges abhängig ist.

8. Parallel-Hybridantrieb nach Anspruch 6 oder 7, **dadurch gekennzeichnet, dass** die Kupplungs-Erholzeit mit steigender Absolutzahl der Kupplungsbetätigungen und/oder steigender Laufleistung erhöht wird.

9. Parallel-Hybridantrieb nach einem der Ansprüche 3 bis 8, **dadurch gekennzeichnet, dass** die Anzahl der Kupplungsbetätigungen und/oder die Einkuppelzeit durch eine Überwachung der Drehzahlen des Verbrennungsmotors (2) und der Elektro-Maschine (3) erfasst wird.

10. Parallel-Hybridantrieb nach einem der Ansprüche 3 bis 9, **dadurch gekennzeichnet, dass** in Abhängigkeit von der Laufleistung und/oder der durchgesetzten Energie die maximalen Momente und Leistungen beim Boosten und/oder Rekuperieren der Elektro-Maschine (3) zurückgenommen werden.

11. Parallel-Hybridantrieb nach einem der Ansprüche 3 bis 10, **dadurch gekennzeichnet, dass** der SOH des Energiespeichers (4) ermittelt wird, wobei bei Unterschreitung vorgebbarer Schwellwerte der maximale Lade- und Entladestrom begrenzt wird.

12. Verfahren zur Ansteuerung eines Parallel-Hybridantriebes, wobei der Parallel-Hybridantrieb mindestens eine Elektro-Maschine, einen Verbrennungsmotor, mindestens einen elektrischen Energiespeicher und mindestens ein Steuergerät zur Ansteuerung des Parallel-Hybridantriebs umfasst,
**dadurch gekennzeichnet, dass**
in dem mindestens einen Steuergerät (7, 8, 10) eine Soll-Alterungskurve für mindestens eine Komponente abgelegt ist, eine Ist-Alterungskurve der Komponente erfasst wird, wobei bei einer Überschreitung der Soll-Alterungskurve durch die Ist-Alterung die Betriebsstrategie derart angepasst wird, dass die Ist-Alterung sich der Soll-Alterung annähert.

13. Verfahren nach Anspruch 12, **dadurch gekennzeichnet, dass** die Elektro-Maschine (3) über eine Kupplung (9) mit der Motorwelle des Verbrennungsmotors (2) verbunden wird.

14. Verfahren nach Anspruch 12 oder 13, **dadurch gekennzeichnet, dass** die mindestens eine Komponente, deren Soll-Alterungskurve in dem mindestens einen Steuergerät (7, 8, 10) abgelegt ist, der elektrische Energiespeicher (4) und/oder die Leistungselektronik und/oder die Elektro-Maschine (3) und/oder die Kupplung (9) zwischen Elektro-Maschine (3) und Verbrennungsmotor (2) ist.

15. Verfahren nach Anspruch 14, **dadurch gekennzeichnet, dass** die Anzahl der Kupplungsbetätigungen und/oder die Laufleistung und/oder die mittlere in die Kupplung eingetragene Energie bei einer Betätigung erfasst wird, wobei bei Überschreiten mindestens eines Schwellwertes die Betriebsstrategie derart geändert wird, dass die Anzahl der Kupplungsbetätigungen reduziert wird.

16. Verfahren nach Anspruch 15, **dadurch gekennzeichnet, dass** der Schwellwert eine Anzahl von Kupplungsbetätigungen und/oder ein laufleistungsspezifischer Wert und/oder ein laufleistungsspezifischer Wert oberhalb einer Laufleistung ist.

17. Verfahren nach einem der Ansprüche 14 bis 16, **dadurch gekennzeichnet, dass** als Betriebsstrategie eine Kupplungs-Erholzeit definiert wird, innerhalb derer eine Kupplungsbetätigung unterbleibt.

18. Verfahren nach Anspruch 17, **dadurch gekennzeichnet, dass** die Kupplungs-Erholzeit von der Geschwindigkeit des Kraftfahrzeugs abhängig ist.

19. Verfahren nach Anspruch 17 oder 18, **dadurch gekennzeichnet, dass** die Kupplungs-Erholzeit mit steigender Absolutzahl der Kupplungsbetätigungen und/oder steigender Laufleistung erhöht wird.

20. Verfahren nach einem der Ansprüche 14 bis 19, **dadurch gekennzeichnet, dass** die Anzahl der Kupplungsbetätigungen und/oder die Einkuppelzeit durch eine Überwachung der Drehzahlen des Verbrennungsmotors (2) und der Elektro-Maschine (3) erfasst wird.

21. Verfahren nach einem der Ansprüche 14 bis 20, **dadurch gekennzeichnet, dass** in Abhängigkeit von der Laufleistung und/oder der durchgesetzten Energie die maximalen Momente und Leistungen beim Boosten und/oder Rekuperieren zurückgenommen werden.

22. Verfahren nach einem der Ansprüche 14 bis 21, **dadurch gekennzeichnet, dass** der SOH des Energiespeichers ermittelt wird, wobei bei Unterschreitung vorgebbarer Schwellwerte der maximale Lade- und Entladestrom begrenzt wird.

## Claims

1. Parallel hybrid drive, comprising at least an electric machine, an internal combustion engine, at least one electric energy accumulator and at least one control unit for actuating the parallel hybrid drive,
**characterized in that**
a setpoint ageing curve for at least one component is stored in the at least one control unit (7, 8, 10), and actual ageing of the component is recorded, wherein when the setpoint ageing curve is exceeded by the actual ageing the operating strategy is adapted in such a way that the actual ageing approximates the setpoint ageing curve.

2. Parallel hybrid drive according to Claim 1, **characterized in that** the electric machine (3) is connected to the engine shaft of the internal combustion engine (2) via a clutch (9).

3. Parallel hybrid drive according to Claim 1 or 2, **characterized in that** the at least one component whose setpoint ageing curve is stored in the at least one control unit (7, 8, 10) is the electrical energy accumulator (4) and/or the power electronics and/or the electric machine (3) and/or the clutch (9) between the electric machine (3) and the internal combustion engine (2).

4. Parallel hybrid drive according to Claim 3, **characterized in that** the number of activations of the clutch and/or the running performance and/or the average amount of energy input into the clutch are detected during an activation, wherein when at least one threshold value is exceeded, the operating strategy is changed in such a way that the number of activations of the clutch is reduced.

5. Parallel hybrid drive according to Claim 4, **characterized in that** the threshold value is a number of activations of the clutch and/or a running-performance-specific value and/or a running-performance-specific value above a running performance.

6. Parallel hybrid drive according to one of Claims 3 to 5, **characterized in that** a clutch recovery time within which a clutch activation does not occur is defined as an operating strategy.

7. Parallel hybrid drive according to Claim 6, **characterized in that** the clutch recovery time is dependent on the speed of the motor vehicle.

8. Parallel hybrid drive according to Claim 6 or 7, **characterized in that** the clutch recovery time is increased as the absolute number of activations of the clutch increases and/or the running performance increases.

9. Parallel hybrid drive according to one of Claims 3 to 8, **characterized in that** the number of activations of the clutch and/or the coupling time is detected by monitoring the rotation speeds of the internal combustion engine (2) and of the electric machine (3).

10. Parallel hybrid drive according to one of Claims 3 to 9, **characterised in that** the maximum torques and power levels are reduced in the case of boosting and/or recuperation of the electric machine (3) as a function of the running performance and/or the energy which is implemented.

11. Parallel hybrid drive according to one of Claims 3 to 10, **characterized in that** the SOH of the energy accumulator (4) is determined, wherein when predefinable threshold values are undershot, the maximum charging current and discharging current is limited.

12. Method for actuating a parallel hybrid drive, wherein the parallel hybrid drive comprises at least an electric machine, an internal combustion engine, at least one electric energy accumulator and at least one control unit for actuating the parallel hybrid drive,
**characterized in that**
a setpoint ageing curve for at least one component is stored in the at least one control unit (7, 8, 10), an actual ageing curve of the component is recorded, wherein when the setpoint ageing curve is exceeded by the actual ageing the operating strategy is adapted in such a way that the actual ageing approximates the setpoint ageing.

13. Method according to Claim 12, **characterized in that** the electric machine (3) is connected to the engine shaft of the internal combustion engine (2) via a clutch (9).

14. Method according to Claim 12 or 13, **characterized in that** the at least one component whose setpoint ageing curve is stored in the at least one control unit (7, 8, 10) is the electrical energy accumulator (4) and/or the power electronics and/or the electric machine (3) and/or the clutch (9) between the electric machine (3) and the internal combustion engine (2).

15. Method according to Claim 14, **characterized in that** the number of activations of the clutch and/or the running performance and/or the average amount of energy input into the clutch are detected during an activation, wherein when at least one threshold value is exceeded, the operating strategy is changed in such a way that the number of activations of the clutch is reduced.

16. Method according to Claim 15, **characterized in that** the threshold value is a number of activations of the clutch and/or a running-performance-specific value and/or a running-performance-specific value above a running performance.

17. Method according to one of Claims 14 to 16, **characterized in that** a clutch recovery time within which clutch activation does not occur is defined as an operating strategy.

18. Method according to Claim 17, **characterized in that** the clutch recovery time is dependent on the speed of the motor vehicle.

19. Method according to Claim 17 or 18, **characterized in that** the clutch recovery time is increased as the absolute number of activations of the clutch increases and/or running performance increases.

20. Method according to one of Claims 14 to 19, **characterized in that** the number of activations of the clutch and/or the coupling time is detected by monitoring the rotational speeds of the internal combustion engine (2) and of the electric machine (3).

21. Method according to one of Claims 14 to 20, **characterized in that** the maximum torques and power levels are reduced in the case of boosting and/or recuperation as a function of the running performance and/or the energy which is implemented.

22. Method according to one of Claims 14 to 21, **characterized in that** the SOH of the energy accumulator is determined, wherein when predefinable threshold values are undershot, the maximum charging current and discharging current is limited.

## Revendications

1. Groupe propulseur hybride parallèle, comprenant au moins une machine électrique, un moteur à combustion interne, au moins un accumulateur d'énergie électrique et au moins un contrôleur servant à commander le groupe propulseur hybride parallèle,
**caractérisé en ce que**
dans l'au moins un contrôleur (7, 8, 10) est stockée une courbe de vieillissement de consigne pour au moins un composant, un vieillissement réel est détecté, un dépassement de la courbe de vieillissement de consigne par le vieillissement réel donnant lieu à une adaptation de la stratégie de fonctionnement de telle sorte que le vieillissement réel se rapproche de la courbe de vieillissement de consigne.

2. Groupe propulseur hybride parallèle selon la revendication 1, **caractérisé en ce que** la machine électrique (3) est reliée par le biais d'un accouplement (9) à l'arbre de moteur du moteur à combustion interne (2).

3. Groupe propulseur hybride parallèle selon la revendication 1 ou 2, **caractérisé en ce que** l'au moins un composant dont la courbe de vieillissement de consigne est stockée dans l'au moins un contrôleur (7, 8, 10) est l'accumulateur d'énergie électrique (4) et/ou l'électronique de puissance et/ou la machine électrique (3) et/ou l'accouplement (9) entre la machine électrique (3) et le moteur à combustion interne (2).

4. Groupe propulseur hybride parallèle selon la revendication 3, **caractérisé en ce que** le nombre d'actionnements de l'accouplement et/ou le kilométrage parcouru et/ou l'énergie moyenne appliquée dans l'accouplement lors d'un actionnement sont détectés, le dépassement d'au moins une valeur de seuil donnant lieu à une modification de la stratégie de fonctionnement de telle sorte que le nombre d'actionnements de l'accouplement est réduit.

5. Groupe propulseur hybride parallèle selon la revendication 4, **caractérisé en ce que** la valeur de seuil est un nombre d'actionnements de l'accouplement et/ou une valeur spécifique au kilométrage parcouru et/ou une valeur spécifique au kilométrage parcouru au-dessus d'un kilométrage parcouru.

6. Groupe propulseur hybride parallèle selon l'une des revendications 3 à 5, **caractérisé en ce que** la stratégie de fonctionnement définie est un temps de rétablissement de l'accouplement à l'intérieur duquel un actionnement de l'accouplement n'est pas appliqué.

7. Groupe propulseur hybride parallèle selon la revendication 6, **caractérisé en ce que** le temps de rétablissement de l'accouplement dépend de la vitesse du véhicule automobile.

8. Groupe propulseur hybride parallèle selon la revendication 6 ou 7, **caractérisé en ce que** le temps de rétablissement de l'accouplement est augmenté lorsque le nombre absolu d'actionnements de l'accouplement augmente et/ou le kilométrage parcouru augmente.

9. Groupe propulseur hybride parallèle selon l'une des revendications 3 à 8, **caractérisé en ce que** le nombre d'actionnements de l'accouplement et/ou la durée d'embrayage sont détectés par le biais d'une surveillance des vitesses de rotation du moteur à combustion interne (2) et de la machine électrique (3).

10. Groupe propulseur hybride parallèle selon l'une des revendications 3 à 9, **caractérisé en ce que** les moments et les puissances maximums lors de la suralimentation et/ou de la récupération de la machine électrique (3) sont supprimés en fonction du kilométrage parcouru et/ou de l'énergie mise en oeuvre.

11. Groupe propulseur hybride parallèle selon l'une des revendications 3 à 10, **caractérisé en ce que** l'état de charge de l'accumulateur d'énergie (4) est déterminé, le courant de charge et de décharge maximum étant limité en cas de franchissement vers le bas de valeurs de seuil pouvant être prédéfinies.

12. Procédé de commande d'un groupe propulseur hybride parallèle, le groupe propulseur hybride parallèle comprenant au moins une machine électrique, un moteur à combustion interne, au moins un accumulateur d'énergie électrique et au moins un contrôleur servant à commander le groupe propulseur hybride parallèle,
**caractérisé en ce que**
dans l'au moins un contrôleur (7, 8, 10) est stockée une courbe de vieillissement de consigne pour au moins un composant, une courbe de vieillissement réelle du composant est détectée, un dépassement de la courbe de vieillissement de consigne par le vieillissement réel donnant lieu à une adaptation de la stratégie de fonctionnement de telle sorte que le vieillissement réel se rapproche du vieillissement de consigne.

13. Procédé selon la revendication 12, **caractérisé en ce que** la machine électrique (3) est reliée par le biais d'un accouplement (9) à l'arbre de moteur du moteur à combustion interne (2).

14. Procédé selon la revendication 12 ou 13, **caractérisé en ce que** l'au moins un composant dont la courbe de vieillissement de consigne est stockée dans l'au moins un contrôleur (7, 8, 10) est l'accumulateur d'énergie électrique (4) et/ou l'électronique de puissance et/ou la machine électrique (3) et/ou l'accouplement (9) entre la machine électrique (3) et le moteur à combustion interne (2).

15. Procédé selon la revendication 14, **caractérisé en ce que** le nombre d'actionnements de l'accouplement et/ou le kilométrage parcouru et/ou l'énergie moyenne appliquée dans l'accouplement lors d'un actionnement sont détectés, le dépassement d'au moins une valeur de seuil donnant lieu à une modification de la stratégie de fonctionnement de telle sorte que le nombre d'actionnements de l'accouplement est réduit.

16. Procédé selon la revendication 15, **caractérisé en ce que** la valeur de seuil est un nombre d'actionnements de l'accouplement et/ou une valeur spécifique au kilométrage parcouru et/ou une valeur spécifique au kilométrage parcouru au-dessus d'un kilométrage parcouru.

17. Procédé selon l'une des revendications 14 à 16, **caractérisé en ce que** la stratégie de fonctionnement définie est un temps de rétablissement de l'accouplement à l'intérieur duquel un actionnement de l'accouplement n'est pas appliqué.

18. Groupe propulseur hybride parallèle selon la revendication 17, **caractérisé en ce que** le temps de rétablissement de l'accouplement dépend de la vitesse du véhicule automobile.

19. Procédé selon la revendication 17 ou 18, **caractérisé en ce que** le temps de rétablissement de l'accouplement est augmenté lorsque le nombre absolu d'actionnements de l'accouplement augmente et/ou le kilométrage parcouru augmente.

20. Procédé selon l'une des revendications 14 à 19, **caractérisé en ce que** le nombre d'actionnements de l'accouplement et/ou la durée d'embrayage sont détectés par le biais d'une surveillance des vitesses de rotation du moteur à combustion interne (2) et de la machine électrique (3).

21. Procédé selon l'une des revendications 14 à 20, **caractérisé en ce que** les moments et les puissances maximums lors de la suralimentation et/ou de la récupération sont supprimés en fonction du kilométrage parcouru et/ou de l'énergie mise en oeuvre.

22. Procédé selon l'une des revendications 14 à 21, **caractérisé en ce que** l'état de charge de l'accumulateur d'énergie est déterminé, le courant de charge et de décharge maximum étant limité en cas de franchissement vers le bas de valeurs de seuil pouvant être prédéfinies.
